Europäisches Patentamt

European Patent Office

Office européen des brevets

(19)

(11) Veröffentlichungsnummer : **0 070 020**
**B1**

# (12) EUROPÄISCHE PATENTSCHRIFT

(45) Veröffentlichungstag der Patentschrift :
**09.10.85**

(21) Anmeldenummer : **82106195.9**

(22) Anmeldetag : **12.07.82**

(51) Int. Cl.⁴ : **H 01 M  6/18**

(54) **Galvanisches Element.**

(30) Priorität : **14.07.81 DE 3127820**

(43) Veröffentlichungstag der Anmeldung :
**19.01.83 Patentblatt 83/03**

(45) Bekanntmachung des Hinweises auf die Patenterteilung : **09.10.85 Patentblatt 85/41**

(84) Benannte Vertragsstaaten :
**CH DE FR GB LI SE**

(56) Entgegenhaltungen :
**CH-A-   419 262**
**DE-A- 2 604 085**
**DE-A- 2 755 797**
**GB-A-   999 948**
**US-A- 4 252 874**
**SOLID STATE IONICS, Band 5, Oktober 1981, Seiten 451-454, Amsterdam (NL) ; M. LAL et al.: "Studies of proton conduction in the zeolites H-natrolite and H-mordenite"**
**ELECTROCHIMICA ACTA, Band 23, 1978, Seiten 1271-1274, Pergamon Press Ltd., (GB) ; M. SUSIC et al.: "The electrochemical behaviour of synthetic zeolites-1. The NaA zeolite and the NaA. NaNO3 inclusion complex"**

(73) Patentinhaber : **Max-Planck-Gesellschaft zur Förderung der Wissenschaften e.V.**
**Bunsenstrasse 10**
**D-3400 Göttingen (DE)**

(72) Erfinder : **Kreuer, Klaus-Dieter**
**Danzinger Strasse 3**
**D-7030 Böblingen (DE)**
Erfinder : **Weppner, Werner**
**Weinbergweg 20a**
**D-7000 Stuttgart 80 (DE)**
Erfinder : **Rabenau, Albrecht, Prof., Dr.**
**Knappenweg 21 b**
**D-7000 Stuttgart 80 (DE)**

(74) Vertreter : **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel**
**Postfach 860820**
**D-8000 München 86 (DE)**

0 070 020

## Beschreibung

Die Erfindung betrifft ein galvanisches Element bzw. eine Primärzelle oder eine Sekundärzelle mit einer Metalloxid- oder Metallsulfid-Elektrode, mit einer metallischen Elektrode und einem dazwischenliegenden Elektrolyt bzw. Separator.

Galvanische Elemente mit einer Metalloxidelektrode, einer metallischen Elektrode und einem dazwischenliegenden Elektrolyt sind bereits seit langem bekannt. Diese vorbekannten galvanischen Elemente verwenden jedoch flüssige Elektrolyten (z. B. Alkalimetall-hydroxid-Lösungen). Diese flüssigen Elektrolyten sind wegen ihrer Zustandsform und insbesondere auch wegen ihrer Korrosivität von Nachteil. Insbesondere besteht ein Bedürfnis dafür, feste Elektrolyte einzusetzen, die keine Korrosionsprobleme aufwerfen.

Es sind bereits elektrochrome Anzeigezellen bekannt, die eine Metalloxidelektrode, eine metallische Elektrode und einen dazwischenliegenden festen Protonenleiter aus Hydrogenuranylphosphat-tetrahydrat (HUO$_2$PO$_4 \cdot$ 4H$_2$O) aufweisen (T. Takahashi et al., Journal of Applied Electrochemistry 10 (1980) 415-416). Diese elektrochromen Zellen, die als Anzeigeelemente verwendet werden, sind jedoch nicht als galvanische Elemente oder Stromsammler geeignet.

Es ist weiterhin bekannt, für Brennstoffzellen protonenleitende Elektrolyte zu verwenden (T. Takahashi et al., Int. I. Hydrogen Energy, Vol. 4 (1979) 327-338).

Schließlich sind bereits galvanische Elemente auf der Grundlage von Wasserstoffkonzentrationszellen bekannt, die feste Elektrolyten aus Hydrogenuranylphosphat-tetrahydrat aufweisen (P.E. Childs et al., Journal of Power Sources 3 (1978), 105-114).

Aus CH-PS 419 262 sind Protonenleiter bekannt, bei denen ein reiner Protonentransport erfolgt. Deshalb sind dort als Kathodenmaterial nur solche Oxide geeignet, deren Reduktion durch den Einbau von Wasserstoff erfolgt. Weiterhin ist aus GB-A-999 948 bekannt, Zeolithen als feste Protonenleiter zu verwenden. Diese Zeolithen müssen jedoch ein Edelmetallkation enthalten.

In all diesen Fällen wird ausschließlich die Eigenschaft des Separatormaterials, Protonen zu leiten, ausgenutzt. Es hat sich jedoch gezeigt, daß fast alle guten Protonenleiter gleichzeitig einen hohen Diffusionskoeffizienten für Wasser und vergleichbare Spezies zeigen, was die erfindungsgemäßen « Galvanischen Elemente » erst ermöglicht. In einem solchen Element laufen die Protonen von der Kathode zur Anode, wohingegen die Wassermoleküle (oder ein anderes Material z. B. H$_2$S) in die entgegengesetzte Richtung transportiert werden.

Die Aufgabe der vorliegenden Erfindung besteht nun darin, galvanische Elemente der eingangs angegebenen Gattung zu schaffen, die einen festen Elektrolyten oder Separator aufweisen, der trotz einer hohen Protonenleitfähigkeit keine Korrosionsprobleme mit sich bringt und galvanische Elemente mit hoher Leistung und langer Lebensdauer ergibt.

Diese Aufgabe wird erfindungsgemäß gelöst durch ein galvanisches Element mit einer Metalloxid- oder Metall-sulfid-Elektrode, einer metallischen Elektrode und einem dazwischenliegenden festen Protonenleiter als Elektrolyt (Separator), das dadurch gekennzeichnet ist, daß es als festen Protonenleiter einen protonenhaltige Kationen aufweisenden Zeolith enthält, der in seinen Kristall-Gitterkanälen eine den Protonentransport begünstigende Phase aufweist.

Der feste Protonenleiter des erfindungsgemäßen galvanischen Elements kann auch eine der bekannten protonenleitenden Substanzen H$_3$X$_{12}$PO$_{40} \cdot$ 29H$_2$O (worin X für Mo oder W steht), H$_8$UO$_2$(JO$_6$) $\cdot$ 4H$_2$O, JUO$_2$AsO$_4 \cdot$ 4H$_2$O, HUO$_2$PO$_4 \cdot$ 4H$_2$O, (H$_2$O)$_n$(H$_3$O)β″-Aluminiumoxid, (H$_2$O)$_n$(H$_3$O)(NH$_4$)β″-Aluminiumoxid, H$_3$OClO$_4$, Sb$_2$O$_5 \cdot$ 4H$_2$O, (H$_3$O)Al$_3$(SO$_4$)(OH)$_6 \cdot$ nH$_2$O und SnO$_2 \cdot$ 2,3H$_2$O sein.

Gegenstand der Erfindung sind daher die galvanischen Elemente gemäß Hauptansprüchen 1 und 15. Die Unteransprüche betreffen besonders bevorzugte Ausführungsformen dieser Erfindungsgegenstande.

Vorzugsweise ist der feste Protonenleiter jedoch ein protonenhaltige, Kationen aufweisende Zeolith, der in seinen Kristallgitterkanälen eine den Protonentransport begünstigende Phase enthält. Es ist bekannt, daß Zeolithe, d. h. Alumosilikate, eine Gitterstruktur aufweisen, die durchlaufende Kanäle unterschiedlichen Durchmessers umfaßt. Da die Zeolithe zum Ionenaustausch neigen, kann eine Reihe von Kationen bzw. Kationenkombinationen in die Kristallstruktur eingebaut werden, so auch Protonen, die allerdings in solchen Strukturen nicht mobil sind, sondern fest unter Bildung von Hydroxylgruppen an die Sauerstoffatome gebunden werden. Es hat sich nun überraschenderweise gezeigt, daß, wenn man zuzüglich in das Gitter des Zeoliths protonenhaltige Kationen auf der Grundlage einer basischen Phase wie Wasser, Ammoniak, organischen Aminen und dergleichen einführt, die Protonen mit Hilfe dieser protonenhaltigen Kationen entsprechend dem Diffusionskoeffizienten der basischen Phase transportiert werden. Dabei handelt es sich um eine translatorische Bewegung von komplexen protonenhaltigen Kationen, wie H$_3$O$^+$, NH$_4^+$, N$_2$H$_5^+$, H$^+$-Pyridin, CH$_3$NH$_3^+$ etc., die sich aus der basischen Phase (H$_2$O, NH$_3$, N$_2$H$_4$, Pyridin, CH$_3$NH$_2$ etc.) und dem von ihr transportierten Proton (H$^+$) bilden. In dieser Weise werden die Protonen an die basische Phase gebunden und können auf ihr transportiert werden. Dabei kann die Beweglichkeit sehr gering sein, wenn die basische Phase sehr viel kleiner ist als die Kanäle der zeolithischen Struktur. Die Beweglichkeit kann jedoch durch Zugabe einer weiteren Phase, nämlich einer den Protonentransport begünstigenden Phase (z. B. Wasser, Methanol, Äthanol oder dergleichen)

2

erheblich gesteigert werden, so daß man in dieser Weise ein Material erhält, das bei Raumtemperatur eine Protonenleitfähigkeit von mehr als $10^{-3}$ Ohm$^{-1} \cdot$ cm$^{-1}$ aufweist. Es hat sich nun gezeigt, daß diese protonenleitfähigen Zeolithe sich besonders gut als Elektrolyten oder Separatoren für galvanische Elemente, und zwar Primärzellen und Sekundärzellen, eignen, da das Material nicht zu Korrosionsproblemen Anlaß gibt und sehr leicht durch Verpressen oder Sintern zu dimensionsstabilen beständigen Körpern verformt werden kann, mit denen es gelingt, galvanische Elemente hoher Leistung und langer Lebensdauer herzustellen.

Gemäß einer bevorzugten Ausführungsform der Erfindung verwendet man als Elektrolyt einen Zeolith in der Ammoniumform, der in seinen Kristallgitterkanälen eine den Protonentransport begünstigende Phase enthält, wobei der Zeolith vorzugsweise einen Kristall-Durchmesser von größer als 0,16 nm aufweist.

Gemäß einer noch stärker bevorzugten Ausführungsform der Erfindung setzt man einen Zeolith ein, der in seiner zeolithischen Struktur Sechsringe und größere Ringe als Sekundärbaugruppen aufweist. Im Hinblick auf die Struktur von Zeolithen darf verwiesen werden auf R.M. Barrer « Zeolites and Clay Minerals as Sorbents and Molecular Sieves », Academic Press, London, New York, San Francisco (1978) und Friedrich Schwochow et al. « Zeolithe-Herstellung, Struktur, Anwendung », Angewandte Chemie, 87. Jahrgang (1975) Nr. 18, Seiten 659-667. In diesen Druckschriften ist angegeben, daß man die zeolithische Struktur am besten mit Hilfe von acht Sekundärbaugruppen beschreiben kann, die Vierringe (4), Sechsringe (6), Achtringe (8), doppelte Vierringe (4-4), doppelte Sechsringe (6-6) und komplexe Sekundärbaugruppen (4-1, 5-1 und 4-4-1) umfassen.

Es hat sich gezeigt, daß die Zeolithe, die Sechsringe und größere Ringe aufweisen, erfindungsgemäß besonders geeignet sind. Hierunter fallen insbesondere die Zeolithe der Analcim-Gruppe, der Chabasit-Gruppe, der Phillipsit-Gruppe und der Faujasit-Gruppe. Erfindungsgemäß besonders bevorzugt sind die festen Protonenleiter K-Analcim.nL, K-Phillipsit.nL, K-Gismondin.nL, K-Zeolith Omega.nL, K-Zeolith L.nL, K-Sodalith.nL, K-Zeolith X.nL, K-Zeolith Y.nL, K-Zeolith A.nL und K-Zeolith ZK-5.nL umfassenden Gruppe, worin

K für NH$_4{}^+$, N$_2$H$_5{}^+$, H$^+$-organisches Amin oder H$_3$O$^+$ (neben anderen Kationen oder ausschließlich) und

L für H$_2$O oder einen niedrigmolekularen aliphatischen oder cycloaliphatischen Alkohol mit nicht mehr als 6 Kohlenstoffatomen stehen.

Diese Zeolithe enthalten in den Kristallgitterkanälen des Zeoliths eine mobile Phase, nämlich die den Protonentransport begünstigende Phase, deren Menge vorzugsweise geringer ist, als die Menge, die zum Ausfüllen der für die mobile Phase zugänglichen Kristallgitterkanäle der zeolithischen Struktur erforderlich ist. Es hat sich nämlich gezeigt, daß eine überraschend wesentlich höhere Leitfähigkeit bereits dann erreicht werden kann, wenn nicht, wie bislang angenommen, mehr als die zur Auffüllung der Gitterkanäle notwendige Menge einer Phase, beispielsweise Wasser, vorliegt. Gemäß einer bevorzugten Ausführungsform der Erfindung liegt die den Protonentransport begünstigende Phase in einer zur Ausbildung einer monomolekularen Schicht auf den Kristallitoberflächen des Zeoliths ausreichenden Menge vor. Dies kann dadurch erreicht werden, daß man den in die Ammoniumform überführten Zeolith bei Temperaturen von 500-600 °C, gegebenenfalls im Vakuum sintert und dann wieder mit der den Protonentransport begünstigenden Phase ins Gleichgewicht bringt.

Die den Protonentransport begünstigende Phase muß einen Diffusionskoeffizienten von mindestens $10^{-15}$ cm$^2 \cdot$ s$^{-1}$ aufweisen. Hierfür besonders bevorzugte Materialien sind Wasser, Methanol oder Äthanol.

Die erfindungsgemäß bevorzugt eingesetzten festen Protonenleiter enthalten als protonenhaltige Kationen vorzugsweise Kationen auf der Grundlage von Ammoniak, Hydrazin oder eines organischen Amins, vorzugsweise eines niedrigmolekularen aliphatischen, cycloaliphatischen oder aromatischen Amins mit 1 bis 6 Kohlenstoffatomen, wie insbesondere Methylamin, Äthylamin oder Pyridin und als den Protonentransport begünstigende Phase vorzugsweise eine polare Phase, noch bevorzugter Wasser und/oder Alkohol. Als fester Protonenleiter besonders bevorzugt sind Zeolithe, die Ammoniumionen als protonenhaltige Kationen und Wasser als den Protonentransport begünstigende Phase enthalten.

Die erfindungsgemäßen galvanischen Elemente zeichnen sich gegenüber den herkömmlichen Elementen mit flüssigen Elektrolyten dadurch aus, daß sie eine höhere mechanische Stabilität besitzen und daß Veränderungen der Elektrodenmaterialien während des Betriebs reversibel sind, da die Reaktionsprodukte an Ort und Stelle verbleiben.

Die Erfindung sei im folgenden näher unter Bezugnahme auf die folgenden Beispiele erläutert.

Beispiel 1

Herstellung eines protonenleitenden Zeoliths

Man trägt 5 g Zeolith des Typs A der ungefähren Zusammensetzung Na$_4$Ca$_4$Al$_{12}$Si$_{12}$O$_{48}$ (Linde-Molekularsieb 5A, pseudokubisch a = 1,242 nm) in 250 ml einer wäßrigen gesättigten Ammoniumcarbonatlösung ein. In exotherme Reaktion tauscht man bei ständigem Rühren über Nacht etwa 50 % der Natriumionen gegen Ammoniumionen aus, wobei gleichzeitig etwa 14,5 Gew.-% Wasser aufgenommen

**0 070 020**

werden. Das Reaktionsprodukt (ungefähre Zusammensetzung $(NH_4)_2Na_2Ca_2Al_{12}Si_{12}O_{48} \cdot nH_2O$) wird abfiltriert, an der Luft getrocknet und über Wasser bei Raumtemperatur aufbewahrt. Das Material stellt einen Protonenleiter dar mit einer Leitfähigkeit bei Raumtemperatur von $2 \times 10^{-3}$ Ohm$^{-1} \cdot$ cm$^{-1}$. Das Material läßt sich im Überschuß von Wasser, Alkohol und dergleichen sehr gut verpressen.

Beispiel 2

Man bereitet galvanische Elemente unter Verwendung des gemäß Beispiel 1 hergestellten protonenleitenden Zeoliths, den man zu einem Plättchen mit einem Durchmesser von 8 mm und einer Dicke von 5 mm verpreßt. Man verwendet Elektroden mit einem Durchmesser von ebenfalls 8 mm und einer Dicke von 1 mm. Die in dieser Weise erhaltenen Plättchen werden mit Hilfe von zwei Stahlschrauben in einem Acrylglasgehäuse zusammengedrückt. In der folgenden Tabelle sind die in dieser Weise hergestellten galvanischen Elemente zusammengestellt.

Tabelle

| Elektrodenpaar | Zellspannung (V) | Kurzschlußstrom (µA) | Bemerkung |
|---|---|---|---|
| $MnO_2$ (8 % Graphit)/Fe | 0,7 – 1,2 | 60 | reversibel |
| $MnO_2$ (8 % Graphit)/Sn | 0,86 | 40 | reversibel |
| $MnO_2$ (8 % Graphit)/Al (Hg) | 1,3 | 20 | noch nicht bestimmt |
| $MnO_2$ (8 % Graphit)/Zn | 1,5 | 400 | reversibel |
| $PbO_2$ (8 % Graphit)/Zn | 1,7 | 2500 | reversibel |
| $PbO_2$ (8 % Graphit)/Al (Hg) | 1,5 | 50 | noch nicht bestimmt |
| $PbO_2$ (8 % Graphit)/Cd | 1,3 | 700 | " |
| $PbO_2$ (8 % Graphit)/Pb | 1,1 | 100 | " |
| $NiO_2$/Zn | 1,4 | 200 | " |
| $Co_2O_3$/Zn | 0,7 | 250 | " |
| $TiS_2$/Zn | 0,72 | 2000 | " |
| $MoS_2$/Zn | 1,45 | 2500 | " |

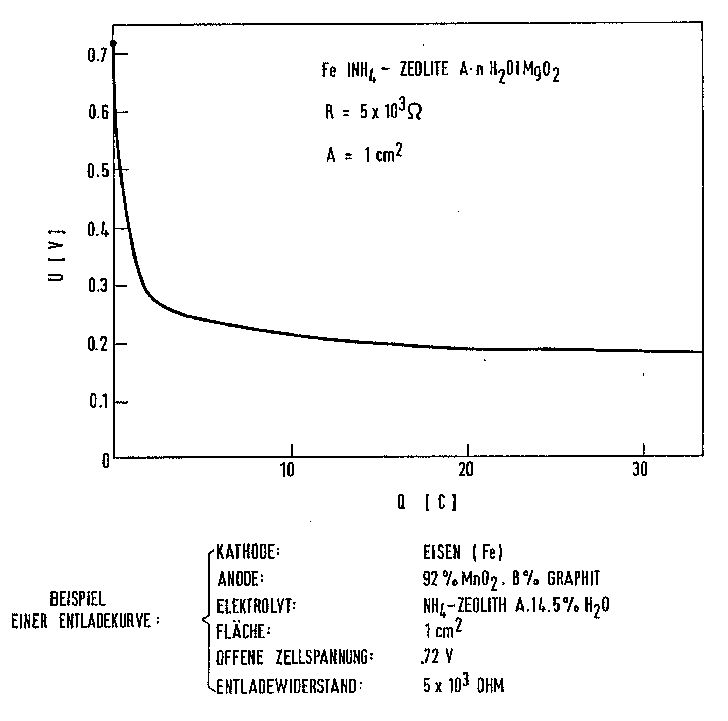

In der beigefügten Zeichnung ist der Anfang der Entladekurve für das $MnO_2$/Fe-Element dargestellt. Es ist erkennbar, daß dieses erfindungsgemäße galvanische Element einen sehr guten Entladungsverlauf zeigt.

Erfindungsgemäß ist es weiterhin möglich, die protonenleitenden Zeolithe bei 300 °C unter Abgabe von Wasser zu sintern, da sie dann, wenn sie wieder mit Wasser ins Gleichgewicht gekommen sind, wieder ihre ursprüngliche Protonenleitfähigkeit aufweisen. Gleiches trifft auch auf Materialien zu, die man bei 600 °C unter Abgabe von Wasser und Ammoniak sintert. Die hierbei erhaltenen Sinterkörper sind relativ abriebfest und mechanisch noch wesentlicher stabiler als die bei 300 °C gesinterten Produkte. Durch die Gleichgewichtseinstellung über einer Ammoniaklösung bei Raumtemperatur erzielt man wieder die Protonenleitfähigkeit des Ausgangsmaterials.


**Patentansprüche**

1. Galvanisches Element mit einer Metalloxid- oder Metallsulfid-Elektrode, einer metallischen Elektrode und einem dazwischenliegenden festen Protonenleiter als Elektrolyt (Separator), dadurch

4

gekennzeichnet, daß es als festen Protonenleiter einen protonenhaltige Kationen aufweisenden Zeolith enthält, der in seinen Kristall-Gitterkanälen eine den Protonentransport begünstigende Phase aufweist.

2. Galvanisches Element nach Anspruch 1, dadurch gekennzeichnet, daß der Zeolith einen Kristallgitterkanal-Durchmesser von größer als 0,16 nm aufweist.

3. Galvanisches Element nach den Ansprüchen 1 oder 2, dadurch gekennzeichnet, daß der Zeolith Sechsringe und größere Ringe als Sekundärbaugruppen der zeolithischen Struktur aufweist.

4. Galvanisches Element nach einem der Ansprüche 1 bis 3, dadurch gekennzeichnet, daß die den Protonentransport begünstigende Phase eine polare Phase ist.

5. Galvanisches Element nach den Ansprüchen 1 bis 4, dadurch gekennzeichnet, daß die den Protonentransport begünstigende Phase in einer Menge vorhanden ist, die über die Ausfüllung der Gitterkanäle hinaus zur Ausbildung einer monomolekularen Schicht auf den Kristalloberflächen ausreicht.

6. Galvanisches Element nach den Ansprüchen 1 bis 4, dadurch gekennzeichnet, daß die den Protonentransport begünstigende Phase in einer Menge vorhanden ist, die geringer ist als die zum Ausfüllen der für diese Phase zugänglichen Kristallgitterkanäle der zeolithischen Struktur erforderliche Menge.

7. Galvanisches Element nach den Ansprüchen 1 bis 6, dadurch gekennzeichnet, daß die den Protonentransport begünstigende Phase einen Diffusionskoeffizienten von mindestens $10^{-15}$ cm$^2 \cdot$ s$^{-1}$ aufweist.

8. Galvanisches Element nach den Ansprüchen 1 bis 7, dadurch gekennzeichnet, daß der Zeolith als protonenhaltige Kationen Ammoniumkation ($NH_4^+$), Hydroniumkationen ($H_3O^+$), Hydraziniumkationen ($N_2H_5^+$) oder organische Aminkationen aufweist.

9. Galvanisches Element nach Anspruch 8, dadurch gekennzeichnet, daß das organische Aminkation ein Kation auf der Grundlage mindestens eines niedrigmolekularen aliphatischen, cycloaliphatischen oder aromatischen Amins mit 1 bis 6 Kohlenstoffatomen, vorzugsweise von Methylamin, Ethylamin oder Pyridin ist.

10. Galvanisches Element nach den Ansprüchen 1 bis 9, dadurch gekennzeichnet, daß der Zeolith als den Protonentransport begünstigende Phase Wasser und/oder einen Alkohol enthält.

11. Galvanisches Element nach Anspruch 10, dadurch gekennzeichnet, daß der Zeolith als Alkohol mindestens einen niedrigmolekularen aliphatischen Alkohol mit 1 bis 6 Kohlenstoffatomen, vorzugsweise Methanol oder Ethanol enthält.

12. Galvanisches Element nach den Ansprüchen 1 bis 11, dadurch gekennzeichnet, daß der Zeolith ein Zeolith der Analcim-Gruppe, der Chabasit-Gruppe, der Phillipsit-Gruppe und/oder der Faujasit-Gruppe ist.

13. Galvanisches Element nach Anspruch 12, dadurch gekennzeichnet, daß es als Zeolith Analcim, Zeolith L, Sodalith, Phillipsit, Gismondin, Zeolith A, Zeolith X, Zeolith Y, Zeolith ZK-5 und/oder Zeolith Omega enthält.

14. Galvanisches Element nach einem der Ansprüche 1 bis 13, dadurch gekennzeichnet, daß es als festen Protonenleiter mindestens einen Vertreter der K-Analcim.nL, K-Phillipsit.nL, K-Gismondin.nL, K-Zeolith Omega.nL, K-Zeolith L.nL, K-Sodalith.nL, K-Zeolith X.nL, K-Zeolith Y.nL, K-Zeolith A.nL und K-Zeolith ZK-5.nL umfassenden Gruppe enthält,
worin
K für $NH_4^+$, $N_2H_5^+$, H$^+$-organisches Amin oder $H_3O^+$ (neben anderen Kationen oder ausschließlich) und
L für $H_2O$ oder einen niedrigmolekularen aliphatischen oder cycloaliphatischen Alkohol mit nicht mehr als 6 Kohlenstoffatomen stehen.

15. Galvanisches Element mit einer Metalloxid- oder Metallsulfid-Elektrode, einer metallischen Elektrode und einem dazwischenliegenden festen Protonleiter als Elektrolyt (Separator), dadurch gekennzeichnet, daß es als festen Protonenleiter mindestens einen Vertreter der $H_3X_{12}PO_{40} \cdot 29H_2O$ (worin X für Mo oder W steht), $H_8UO_2(JO_6) \cdot 3H_2O$, $HUO_2AsO_4 \cdot 4H_2O$, $HUO_2PO_4 \cdot 4H_2O$, $(H_2O)_n(H_3O)\beta''$-Aluminiumoxid, $(H_2O)_n(H_3O)(NH_4)\beta''$-Aluminiumoxid, $H_3OClO_4$, $Sb_2O_5 \cdot 4H_2O$, $(H_3O)Al_3(SO_4)(OH)_6 \cdot nH_2O$ und $SnO_2 \cdot 2,3H_2O$ umfassenden Gruppen enthält.

16. Galvanisches Element nach einem der vorhergehenden Ansprüche, dadurch gekennzeichnet, daß es ein Oxid oder Sulfid eines Übergangsmetalls als Anode und ein unedles Metall als Kathode aufweist.

17. Galvanisches Element nach Anspruch 16, dadurch gekennzeichnet, daß es eine Anode aus gegebenenfalls Kohlenstoff enthaltendem $MnO_2$, gegebenenfalls Kohlenstoff enthaltendem $PbO_2$, $NiO_2$, $Co_2O_3$, $TiS_2$ oder $MoS_2$ und eine Kathode aus Eisen, Zinn, Aluminium (gegebenenfalls in Kombination mit Quecksilber), Zink, Cadmium oder Blei aufweist.

## Claims

1. Galvanic element with a metal oxide or metal sulphide electrode, a metallic electrode and a solid proton conductor as electrolyte (separator) lying therebetween, characterised in that, as solid proton conductor, it contains a zeolite having proton-containing cations which, in its crystal lattice canals, has a phase favouring the proton transport.

2. Galvanic element according to claim 1, characterised in that the zeolite has a crystal lattice canal diameter of greater than 0.16 nm.

3. Galvanic element according to claims 1 or 2, characterised in that the zeolite has six rings and larger rings as secondary structural components of the zeolitic structure.

4. Galvanic element according to one of claims 1 to 3, characterised in that the phase favouring the proton transport is a polar phase.

5. Galvanic element according to claims 1 to 4, characterised in that the phase favouring the proton transport is present in an amount which suffices beyond the filling of the lattice canals for the formation of a monomolecular layer on the crystal surface.

6. Galvanic element according to claims 1 to 4, characterised in that the phase favouring the proton transport is present in an amount which is smaller than the amount necessary for the filling of the crystal lattice canals of the zeolitic structure accessible for this phase.

7. Galvanic element according to claims 1 to 6, characterised in that the phase favouring the proton transport has a diffusion coefficient of at least $10^{-15}$ cm$^2 \cdot$ s$^{-1}$.

8. Galvanic element according to claims 1 to 7, characterised in that the zeolite contains, as proton-containing cations, ammonium cations ($NH_4^+$), hydronium cations ($H_3O^+$), hydrazinium cations ($N_2H_5^+$) or organic amine cations.

9. Galvanic element according to claim 8, characterised in that the organic amine cation is a cation based upon at least one lower molecular aliphatic, cycloaliphatic or aromatic amine with 1 to 6 carbon atoms, preferably of methylamine, ethylamine or pyridine.

10. Galvanic element according to claims 1 to 9, characterised in that, as the phase favouring the proton transport, the zeolite contains water and/or an alcohol.

11. Galvanic element according to claim 10, characterised in that as alcohol the zeolite contains at least one lower molecular alcohol with 1 to 6 carbon atoms, preferably methanol or ethanol.

12. Galvanic element according to claims 1 to 11, characterized in that the zeolite is a zeolite of the analcime group, of the chabazite group, of the phillipsite group and/or of the faujasite group.

13. Galvanic element according to claim 12, characterised in that as zeolite it contains analcime, zeolite L, sodalite, phillipsite, gismondine, zeolite A, zeolite X, zeolite Y, zeolite ZK-5 and/or zeolite omega.

14. Galvanic element according to one of claims 1 to 13, characterised in that, as solid proton conductor, it contains at least one representative of the group comprising K-analcime.nL, K-phillipsite.nL, K-gismondine.nL, K-zeolite omega.nL, K-zeolite L.nL, K-sodalite.nL, K-zeolite X.nL, K-zeolite Y.nL, K-zeolite A.nL and K-zeolite ZK-5.nL, wherein K stands for $NH_4^+$, $N_2H_5^+$, $H^+$-organic amine or $H_3O^+$ (besides other cations or exclusively) and L stands for $H_2O$ or a lower molecular alcohol with not more than 6 carbon atoms.

15. Galvanic element with a metal oxide or metal sulphide electrode, a metallic electrode and a solid proton conductor as electrolyte (separator) lying therebetween, characterised in that, as solid proton conductor, it contains at least one representative of the group comprising $H_3X_{12}PO_{40} \cdot 29H_2O$ (wherein X stands for Mo or W), $H_6UO_2(IO_6) \cdot 3H_2O$, $HUO_2AsO_4 \cdot 4H_2O$, $HUO_2PO_4 \cdot 4H_2O$, $(H_2O)_n(H_3O)\beta''$-aluminium oxide, $(H_2O)_n(H_3O)(NH_4)\beta''$-aluminium oxide, $H_3OClO_4$, $Sb_2O_5 \cdot 4H_2O$, $(H_3O)Al_3(SO_4)(OH)_6 \cdot nH_2O$ and $SnO_2 \cdot 2,3H_2O$.

16. Galvanic element according to one of the preceding claims, characterised in that it has an oxide or sulphide of a transition metal as anode and a base metal as cathode.

17. Galvanic element according to claim 16, characterised in that it has an anode of optionally carbon-containing $MnO_2$, optionally carbon-containing $PbO_2$, $NiO_2$, $Co_2O_3$, $TiS_2$ or $MoS_2$ and a cathode of iron, tin, aluminium (optionally in combination with mercury), zinc, cadmium or lead.

## Revendications

1. Elément galvanique comprenant une électrode d'oxyde métallique ou de sulfure métallique, une électrode métallique et, entre les deux, un conducteur de protons solide en tant qu'électrolyte (séparateur), caractérisé en ce qu'il contient en tant que conducteur de protons solide une zéolithe portant des cations qui contiennent des protons, et qui contient une phase favorisant le transport des protons dans les canaux de son réseau cristallin.

2. Elément galvanique selon la revendication 1, caractérisé en ce que le diamètre des canaux du réseau cristallin de la zéolithe est supérieur à 0,16 nm.

3. Elément galvanique selon la revendication 1 ou 2, caractérisé en ce que la zéolithe présente des cycles hexagonaux et des cycles supérieurs en tant que groupes de structure secondaires de la structure zéolithique.

4. Elément galvanique selon l'une des revendications 1 à 3, caractérisé en ce que la phase favorisant le transport des protons est une phase polaire.

5. Elément galvanique selon les revendications 1 à 4, caractérisé en ce que la phase favorisant le transport des protons est présente en quantité qui, en plus du remplisage complet des canaux du réseau, est suffisante pour former une couche monomoléculaire sur les surfaces de cristaux.

6. Eléments galvaniques selon les revendications 1 à 4, caractérisé en ce que la phase favorisant le transport des protons est présente en quantité inférieure à la quantité nécessaire pour le remplissage complet des canaux du réseau cristallin de la structure zéolithique disponibles pour cette phase.

7. Elément galvanique selon les revendications 1 à 6, caractérisé en ce que la phase favorisant le transport des protons présente un coefficient de diffusion d'au moins $10^{-15}$ $cm^2 \cdot s^{-1}$.

8. Elément galvanique selon les revendications 1 à 7, caractérisé en ce que la zéolithe contient en tant que cations porteurs de protons des cations ammonium ($NH_4^+$), des cations hydronium ($H_3O^+$), des cations hydrazinium ($N_2H_5^+$) ou des cations d'amines organiques.

9. Elément galvanique selon la revendication 8, caractérisé en ce que le cation d'amine organique est un cation dérivant d'au moins une amine aliphatique, cycloaliphatique ou aromatique à bas poids moléculaire contenant 1 à 6 atomes de carbone, de préférence la méthylamine, l'éthylamine ou la pyridine.

10. Elément galvanique selon les revendications 1 à 9, caractérisé en ce que la zéolithe contient en tant que phase favorisant le transport des protons de l'eau et/ou un alcool.

11. Elément galvanique selon la revendication 10, caractérisé en ce que la zéolithe contient en tant qu'alcool au moins un alcool aliphatique à bas poids moléculaire en $C_1-C_6$, de préférence le méthanol ou l'éthanol.

12. Elément galvanique selon les revendications 1 à 11, caractérisé en ce que la zéolithe est une zéolithe du groupe de l'analcime, du groupe de la chabasite, du groupe de la phillipsite et/ou du groupe de faujasite.

13. Elément galvanique selon la revendication 12, caractérisé en ce qu'il contient en tant que zéolithe l'analcime, la zéolithe L, la sodalithe, la phillipsite, la gismondine, la zéolithe A, la zéolithe X, la zéolithe Y, la zéolithe ZK-5 et/ou la zéolithe oméga.

14. Elément galvanique selon l'une des revendications 1 à 13, caractérisé en ce qu'il contient en tant que conducteur de protons solide au moins un représentant du groupe comprenant les corps suivants : C-analcime, nL ; C-phillipsite, nL ; C-gismondine, nL ; C-zéolithe oméga, nL ; C-zéolithe L, nL ; C-sodalithe, nL ; C-zéolithe X, nL ; C-zéolithe Y, nL ; C-zéolithe A, L et C-zéolithe ZK-5, nL, C représentant $NH_4^+$, $N_2H_5^+$, $H^+$-amine organique ou $H_3O^+$ (avec d'autres cations ou isolément) et L représentant $H_2O$ ou un alcool aliphatique ou cycloaliphatique à bas poids moléculaire ne contenant pas plus de 6 atomes de carbone.

15. Elément galvanique comprenant une électrode d'oxyde métallique ou de sulfure métallique, une électrode métallique ou de sulfure métallique, une électrode métallique et, entre les deux, un conducteur de protons solide en tant qu'électrolyte (séparateur), caractérisé en ce qu'il contient en tant que conducteur de protons solide au moins un représentant du groupe comprenant $H_3X_{12}PO_{40},29H_2O$ (X représentant Mo ou W), $H_8UO_2(IO_6),3H_2O$, $HUO_2AsO_4,4H_2O$, $HUO_2PO_4,4H_2O$, $(H_2O)_n(H_3O)$ $\beta"$-alumine, $(H_2O)_n(H_3O)(NH_4)$ $\beta"$-alumine, $H_3OClO_4$, $Sb_2O_5,4H_2O$, $(H_3O)Al_3(SO_4)(OH)_6,nH_2O$, et $SnO_2 \cdot 2,3H_2O$.

16. Elément galvanique selon l'une des revendications qui précèdent, caractérisé en ce qu'il contient un oxyde ou sulfure d'un métal de transition en tant qu'anode et un métal non noble en tant que cathode.

17. Elément galvanique selon la revendication 16, caractérisé en ce que son anode consiste en $MnO_2$ contenant éventuellement du carbone, $PbO_2$ contenant éventuellement du carbonne $NiO_2$, $Co_2O_3$, $TiS_2$ ou $MoS_2$, et sa cathode consiste en fer, étain, aluminium (éventuellement en combinaison avec du mercure), zinc, cadmium ou plomb.

Fe INH$_4$ – ZEOLITE A·n H$_2$OIMgO$_2$

R = 5 x 10$^3$ Ω

A = 1 cm$^2$

U [V]

Q [C]

KATHODE:            EISEN (Fe)
ANODE:              92 % MnO$_2$. 8 % GRAPHIT
ELEKTROLYT:         NH$_4$–ZEOLITH A.14.5 % H$_2$O
FLÄCHE:             1 cm$^2$
OFFENE ZELLSPANNUNG: .72 V
ENTLADEWIDERSTAND:  5 x 10$^3$ OHM

BEISPIEL
EINER ENTLADEKURVE: